Europäisches Patentamt

(19) European Patent Office

Office européen des brevets

(11) Publication number: **0 044 118**
**B1**

(12) **EUROPEAN PATENT SPECIFICATION**

(45) Date of publication of patent specification: **27.12.89**

(21) Application number: **81200801.9**

(22) Date of filing: **13.07.81**

(51) Int. Cl.⁴: **B 01 J 37/02,** B 01 J 37/00, B 01 J 23/76

(54) **A method of preparing a catalyst.**

(30) Priority: **16.07.80 GB 8023224**
**16.07.80 GB 8023226**

(43) Date of publication of application:
**20.01.82 Bulletin 82/03**

(45) Publication of the grant of the patent:
**27.12.89 Bulletin 89/52**

(84) Designated Contracting States:
**AT BE CH DE FR IT LI LU NL SE**

(56) References cited:
**GB-A-1 220 105**
**US-A-2 695 893**
**US-A-3 794 588**
**US-A-3 892 897**
**US-A-4 113 658**
**US-A-4 190 560**
**US-A-4 207 211**
**US-A-4 215 998**

(73) Proprietor: **DYSON REFRACTORIES LIMITED**
**381 Fulwood Road**
**Sheffield, S10 3GB (GB)**

(72) Inventor: **Sambrook, Rodney Martin**
**31 Gainsborough Road**
**Dronfield Sheffield, S18 6QT (GB)**
Inventor: **Ross, Julian Richard Huxham**
**15 Sherwood Avenue**
**Gomersal Cleckheaton, BD19 4RW (GB)**

(74) Representative: **Shaw, Laurence**
**George House George Road**
**Edgbaston Birmingham B15 1PG (GB)**

Courier Press, Leamington Spa, England.

## Description

This invention relates to a method for the production of catalysts.

In service, catalysts must not only be capable of selectively catalysing chemical reactions but also mechanically robust to withstand normal process conditions and possible plant operations such as catalyst regeneration following, e.g., catalyst poisoning. Commercial catalysts have therefore to satisfy the dual requirement of high stable activity and long service life. High catalytic activity is related to a high specific surface area and the accessibility of that surface area. Generally the porosity and pore size distribution of the catalysts must be such that the catalyzed reactions are not wholly diffusion limited, i.e., there is reasonable access to the inner pore surfaces.

Heterogeneous catalysts which consist of metallic catalytic agents on porous carriers have been known for many years. They are often referred to as "supported catalysts", the "support" generally being of high surface area and of high stability. Examples of the supports are the transition aluminas ($\gamma$, $\lambda$, $\kappa$ etc.), silicas, titania, etc. The efficiency of such catalysts depends on a number of properties such as activity, resistance to poisons, thermal stability and selectivity. For many purposes they must also be formed into pellets, or some other suitable form, so that they can be easily handled in service. Such catalyst pellets may have limited mechanical stability.

The various catalysts produced by existing techniques, such as impregnation of a high surface area preformed carrier or the pelletizing of coprecipitated materials, in fact represent compromises between strength, activity and stability. For example, with co-precipitation, the precipitate is frequently a mixed hydroxide or basic hydroxide. These catalysts normally have high active surface areas. These hydroxide materials are generally calcined and then formed into pellets or some other suitable shape, and the catalysts may be activated prior to use or in situ. Particularly with this type of catalyst, the service life is very dependent on the strength of these pellets. A large number of such materials are in common industrial use, for example, nickel-alumina catalysts used for the steam reforming of hydrocarbons in the production of synthetic natural gas. Co-precipitated catalysts normally have higher active surface areas than catalysts prepared by other methods.

Where mechanical strength of the catalysts is of prime importance, impregnation of low surface area preformed refractory materials, such as alpha alumina or mullite, is commonly practised particularly in the manufacture of nickel catalysts for use in cyclic steam reforming plants. These catalysts normally have low active surface areas.

It is known from US patent 4207211 to locate a catalyst comprising nickel promoted with oxides of iron and manganese with a specific Fe:Mn ratio on a refractory support comprising alpha alumina having a low surface area. The support is dipped in a solution of salts of the metals and then calcined.

The use of such low surface area supports is also suggested in US patent 3992166 where the support is in grain form and the salts are precipitated on to the grains.

The object of the present invention is to provide catalysts of relatively high active surface areas and yet have the benefit of the high mechanical strength of a ceramic matrix.

According to one aspect of the invention there is provided a method of making a catalyst located in a porous body, by introducing a solution of salts of a catalytically active metal component to within the pores of a porous body to form a catalyst precursor which is then subjected to calcining, in which the solution introduced into the pores also contains a hydrolysable material in the form of an organic salt which gives an increase in pH on heating and after the solution of salts and hydrolysable material has been introduced into the pores of the body, the body is heated to a temperature suitable for controlled hydrolysis of the hydrolysable material thereby increasing the pH to precipitate the catalytically active metal component within the pores characterised in that

(i) the carrier is a preformed low surface area ceramic matrix, having an apparent porosity of 15% to 80% and mean pore diameter of 0.05 μm to 20 μm,

(ii) the solution is drained off the carrier before the hydrolysis of the hydrolysable material whereby the catalytically active material is confined almost exclusively to within the pores;

(iii) after the pores have been filled and the catalytically active material deposited therein, the pores are reopend by the application of heat to decompose material blocking the pores to further impregnation, and

(iv) the content of catalytically active material within the pores is increased by repetition of the procedure of steps (ii) and (iii).

The term "catalytically active component" as used herein means a metal or compound thereof that has catalytic activity either as formed or when in a reduced or otherwise activated state. The term "spacer" means a material that helps to stabilise small crystallites of the metallic catalytic agent, for example, by preventing these particles coalescing, and the term "promoter" means a material which brings about a different selectivity in the catalyst compared with the material without promoter, for instance by preventing undesirable side-reactions such as coke formation, etc.

The technique used is that of homogeneous co-precipitation using an easily hydrolysable organic salt such as urea.

It is known from a variety of prior proposals e.g. German patent 740634, British patents 1220105, 1318528, 1426270 that one can precipitate metal salts by means of a hydrolysable material, e.g. urea, and by heating to a temperature to a controlled hydrolysis to increase the pH and so precipitate the salts. As shown herein, the technique offers catalysts of great advantage.

Any metallic ion may be used which gives rise to an insoluble hydroxide or basic hydroxide (or combination of species, mixed hydroxides or their equivalents) in the presence of the readily hydrolysable material such as urea which gives an increase in pH of the solution on elevating the temperature when the solution is retained within the pores of the ceramic matrix. The method allows the facile inclusion of various promoters and/or spacers as may be required for specific catalytic processes.

The porous ceramic matrix may be of alpha-alumina but other preformed matrices of ceramic materials such as silicon carbide, chromic oxide, aluminosilicates, silica, etc. may be used. The ceramic matrix has an apparent porosity in the range of 15% to 80% and has a mean pore diameter in the range of $0.05 \times 10^{-6}$ m to $20 \times 10^{-6}$ m. The matrix may comprise the wall of a hollow shape such as hollow spheres.

The ceramic matrix may be pretreated with acid or alkali to encourage an interaction with the active phase and the surface of the ceramic matrix may also be modified by the addition of "spacer/support" material, for example alumina, within the pores of the ceramic matrix prior to the deposition of the active phase. This may be accomplished by the simple impregnation of the ceramic matrix with a soluble salt of the "spacer/support" material, e.g., aluminium nitrate or by using the process disclosed herein.

Preferably to locate the active phase within the preformed ceramic matrix, the matrix is impregnated, preferably under vacuum, with a solution of soluble salts containing the required catalytic components and the hydrolysable material, the ceramic matrix then being removed from the solution and drained. After draining, the ceramic matrix is heated to a temperature suitable for the controlled hydrolysis of the hydrolysable material, thus increasing pH of the absorbed solution and bringing about deposition of the insoluble oxides within the pores. This effectively blocks the pores to further impregnation.

Prior to re-impregnation of the catalyst, the pores must be opened. The pores may be opened by thermal decomposition of material within the pores or the catalyst may be washed with water or a weak alkaline solution for example 0.1 M potassium hydroxide, and then dried at an elevated temperature. The metal loading of the catalyst may thus be increased by multi-impregnation steps.

A specific advantage of a method of the invention lies in the fact that minimal reagent loss occurs and in contrast with other methods of precipitation or impregnation the active phase is almost exclusively confined to the pores of the support.

It will also be obvious to those skilled in the art of catalyst manufacture that the deposition of the components of the active phase may be carried out sequentially. Subsequent treatment of the catalyst depends on the nature of the catalyst and its intended use.

In the case of impregnation by mixtures of salts of metallic ions, use may be made of the nickel, aluminium, lanthanum composition described and claimed in European patent 0044117.

It is preferred that for preparing a catalyst particularly but not exclusively for use in the steam reforming of hydrocarbons, magnesium is incorporated in the aluminium/nickel active phase contained within the pores of a preformed ceramic matrix by inclusion of a magnesium salt in a solution of nickel and aluminium salts prior to precipitation of the hydroxides, by homogeneous precipitation techniques, and that there is post impregnation of the calcined nickel aluminium magnesium active phase with a soluble barium salt with subsequent calcination to the oxides. Preferably, the nickel content of the catalyst is between 5 and 30 wt.% and the Ni:Al atomic ratio 1.5 to 4.0:1 and that for Ni:Mg 1 to 20:1. The barium content of the catalyst is preferably in the range of 0.2% to 10% by weight, it being further preferred that the barium content is in the range 0.2% to 5% by weight.

The temperature of the calcination of the impregnated ceramic matrix must be carefully controlled to achieve the required surface properties. Such materials may then provide a superior catalyst carrier for standard impregnated catalysts.

The invention is illustrated by the following non-limitive examples.

Example 1

Nickel catalysts of approximately the same nickel content were prepared: (a) by conventional impregnation of a preformed alpha-alumina matrix with nickel nitrate hexahydrate solution at 85°C and subsequently calcining the resultant material in air at 450°C and then reducing it in hydrogen at 600°C (Sample A) and (b) according to the present invention, by impregnation of a preformed alpha-alumina matrix with a nickel nitrate/urea solution, draining off the excess liquor, heating the resultant material to 90°C to bring about precipitation within the pores, drying the material at a suitable elevated temperature, calcining in air at 450°C, and reducing in hydrogen at 600°C (Sample B).

The nickel crystallite sizes of the reduced catalyst samples (A) and (B) were determined by conventional X-ray line broadening techniques. (It is generally accepted that the metallic crystallite sizes of catalysts are a good indication of the activity of the catalyst; the lower crystallite size giving the higher activity.)

The catalysts were aged at 800°C in steam and hydrogen for four hours. The nickel crystallite sizes were redetermined.

The rate of growth of the crystallites during the aging test can be related to the stability of the catalyst under hydrothermal conditions and may give an indication of the expected service life of the catalysts.

| Catalyst | Nickel crystallite size $10^{-10}$m Fresh | |
| | reduced | Aged |
| --- | --- | --- |
| A | 300 | 1000 |
| B | 250 | 750 |

## Example 2

A catalyst sample (C) was made as sample (B) but incorporating aluminium nitrate in the nickel nitrate/urea solution. Another catalyst sample (D) was made as sample (B) but incorporating magnesium nitrate in the nickel nitrate/urea solution. Nickel crystallite size determinations were made as in Example 1.

| Catalyst | Nickel crystallite size $10^{-10}$m Fresh | |
| | reduced | Aged |
| --- | --- | --- |
| C | 235 | 530 |
| D | 180 | 340 |

Sample D had improved stability under hydrothermal conditions.

## Example 3

Nickel catalysts were prepared (a) by impregnation of a preformed alpha-alumina matrix with nickel, aluminium and magnesium nitrates/urea solution, heating to 90°C, drying at an elevated temperature and calcining in air at 450°C, (Sample E), the Ni:Al:Mg weight ratio being 3:1:0.2, and (b) by impregnation of catalyst Sample E by barium acetate solution and drying, re-calcining in air at 450°C (Sample F). The catalyst Sample F contained 0.5% by weight of barium.

Catalyst Samples E and F were tested for reforming activity. The catalysts were crushed and then screened to approximately 1 mm diameter granules. 5 cm³ of the catalysts were placed in a tube reactor. The catalysts were reduced in hydrogen at 500°C. Heptane was fed to the reactor at an LHSV of 5 and a steam:C ratio of 4:1 for four hours. The exit temperature was maintained at 650°C. The gasification activity of the catalyst was noted. Sample E gave 100% gasification of the feedstock but carbon was deposited on the catalyst. Sample F, containing barium, gave 100% gasification without carbon deposition.

## Claims

1. A method of making a catalyst located in a porous body, by introducing a solution of salts of a catalytically active metal component to within the pores of a porous body to form a catalyst precursor which is then subjected to calcining, in which the solution introduced into the pores also contains a hydrolysable material in the form of an organic salt which gives an increase in pH on heating and after the solution of salts and hydrolysable material has been introduced into the pores of the body, the body is heated to a temperature suitable for controlled hydrolysis of the hydrolysable material thereby increasing the pH to precipitate the catalytically active metal component within the pores characterised in that

(i) the carrier is a preformed low surface area ceramic matrix, having an apparent porosity of 15% to 80% and mean pore diameter of 0.05 μm to 20 μm,

(ii) the solution is drained off the carrier before the hydrolysis of the hydrolysable material whereby the catalytically active material is confined almost exclusively to within the pores;

(iii) after the pores have been filled and the catalytically active material deposited therein, the pores are reopend by the application of heat to decompose material blocking the pores to further impregnation, and

(iv) the content of catalytically active material within the pores is increased by repetition of the procedure of steps (ii) and (iii).

2. A method according to Claim 1 characterised in that the preformed low surface area ceramic matrix is pretreated by the addition of a solution of a salt of a spacer for the catalyst e.g. aluminium nitrate.

3. A method according to Claim 1 or 2 characterised in that the surfaces of the pores of the ceramic matrix are pretreated by reaction of the matrix with acid or alkali or deposition of a spacer/support material such as alumina before the introduction of the solution of the catalytically active metal component.

4. A method according to any preceding Claim characterised in that the catalytically active metal component comprises nickel, aluminium and magnesium and the carrier is post-impregnated with a soluble barium salt.

5. A catalyst precursor whenever made by a method according to any Claims 1 to 4.

6. A method of making a catalyst from a catalyst precursor according to Claim 5 characterised in that the catalyst precursor contains nickel as the catalyst and the precursor is calcined at 450°C and reduced in hydrogen at 600°C.

7. A nickel catalyst whenever made by a method according to Claim 6.

## Patentansprüche

1. Verfahren zur Herstellung eines Katalysators in einem porösen Material durch Einführen einer Salzlösung mit einer katalytisch wirksamen Metallkomponente in die Poren des Materials, um eine Katalysator-Vorstufe zu bilden, die dann kalziniert, wobei die Lösung, die in die Poren eingeführt wird, auch einen hydrolysierbaren Stoff in Form eines organischen Salzes enthält, durch den sich ein erhöhter pH-Wert ergibt und der nach Erhitzen und Lösen der Salze und des hydrolisierbaren Stoffes in die Poren des Materials eingeführt wurde, wobei der Stoff auf eine Temperatur erhitzt wird, die sich für die kontrollierte Hydrolyse von hydrolysierbaren Stoffen eignet, so daß sich der pH-Wert erhöht, um die katalytisch aktive Metallkomponente in den Poren niederzuschlagen, dadurch gekennzeichnet, daß

(i) die Trägersubstanz eine vorgeformte keramische Trägersubstanz mit kleiner Oberfläche, mit einer wahrnehmbaren Porosität von 15% bis 80% und einem durchschnittlichen Porendurchmesser von 0.05 bis 20 µm ist,

(ii) die Lösung vor Hydrolyse des hydrolysierbaren Stoffes von der Trägersubstanz abgezogen wird, wobei der katalytisch aktive Stoff fast ausschließlich auf die Poren beschränkt ist;

(iii) sich nach Füllen der Poren und Ablagerung des katalytisch aktiven Stoffes die Poren durch Anwendung von Hitze erneut öffnen, um den Stoff zu zersetzen, der die Poren blockiert um erneut getränkt zu werden, und

(iv) der Gehalt des katalytisch aktiven Stoffes in den Poren durch Wiederholung der Vorgänge laut Absatz (ii) und (iii) erhöht wird.

2. Verfahren nach Anspruch 1, dadurch gekennzeichnet, daß die vorgeformte keramische Trägersubstanz mit kleiner Oberfläche durch Zusatz einer Salzlösung als Unterlage für den Katalysator, z.B. Aluminiumnitrat, vorbehandelt wird.

3. Verfahren nach Anspruch 1 oder 2, dadurch gekennzeichnet, daß die Porenoberfläche der keramischen Trägersubstanz durch Reaktion derselben mit einer Säure oder Base oder Auftragung einer Unterlage oder Stützschicht, wie z.B. Aluminiumoxid, vorbehandelt wird, bevor die Lösung der katalytisch aktiven Metallkomponente eingeführt wird.

4. Verfahren nach den vorstehenden Ansprüchen, dadurch gekennzeichnet, daß die katalytisch aktive Metallkomponente Nickel, Aluminium und Magnesium enthält und die Trägersubstanz mit löslichem Bariumnitrat getränkt wurde.

5. Katalytische Vorstufe, falls die Herstellung nach Anspruch 1 bis 4 erfolgt.

6. Verfahren zur Herstellung eines Katalysators von einer Katalysatorvorstufe nach Anspruch 5, dadurch gekennzeichnet, daß die Katalysatorvorstufe wie der Katalysator Nickel enthält und der Vorgänger bei 450°C kalziniert und bei 600°C in Wasserstoff reduziert wird.

7. Ein Nickelkatalysator, falls die Herstellung durch das Verfahren nach Anspruch 6 erfolgt.

**Revendications**

1. Méthode de fabrication d'un catalyseur sis dans un corps poreux, par laquelle on introduit une solution de sels d'un constituant de métal catalytiquement actif à l'intérieur des pores d'un corps poreux pour former un précurseur de catalyseur qui est ensuite soumis à la calcination, et où la solution introduite dans les pores contient aussi un matériau hydrolysable sous forme d'un sel organique qui donne une élévation du pH en chauffant; après l'introduction d'une solution de sels et d'un produit hydrolysable dans les pores du corps, le corps est chauffé à une température permettant l'hydrolyse contrôlée du matériau hydrolysable, augmentant de ce fait le pH pour précipiter le constituant de métal catalytiquement actif à l'intérieur des pores caractérisée en ce que

(i) le support est une matrice en céramique préformée à surface réduite, ayant une porosité apparente de 15% à 80% en des pores d'un diamètre moyen de 0,05 µm à 20 µm,

(ii) la solution est écoulée du support avant l'hydrolyse du matériau hydrolysable, ce qui retient le matériau catalytiquement actif presqu'exclusivement à l'intérieur des pores;

(iii) après le remplissage des pores, une fois le matériau catalytiquement actif déposé à l'intérieur, les pores sont réouverts par l'application de chaleur pour décomposer le produit bloquant les pores à toute imprégnation complémentaire, et (iv) la teneur en produit catalytiquement actif des pores est accrue en répétant les points ii) et iii) du procédé.

2. Méthode qui, selon la revendication 1 est caractérisée en ce que la matrice en céramique préformée à surface réduite est prétraitée en additionnant une solution de sel d'un espaceur pour le catalyseur, par exemple du nitrate d'aluminium.

3. Méthode qui, selon les revendications 1 ou 2 est caractérisée en ce que la surface des pores de la matrice en céramique est prétraitée par réaction de la matrice à l'acide ou l'alcali, ou par le dépôt d'un matériau espaceur/support, telle l'alumine, avant l'introduction de la solution du constituant de métal catalytiquement actif.

4. Méthode qui, selon toute revendication précédente est caractérisée en ce que le constituant de métal catalytiquement actif contient du nickel, de l'aluminium et du magnésium, et le support est imprégné postérieurement avec un sel soluble de baryum.

5. Précurseur catalyseur chaque fois qu'il est fabriqué par une méthode selon une des revendications de 1 à 4.

6. Méthode de fabrication d'un catalyseur à partir d'un précurseur de catalyseur selon la revendication 5 caractérisée en ce que le précurseur du catalyseur contient du nickel comme catalyseur et le précurseur est calciné à 450°C et réduit dans de l'hydrogène à 600°C.

7. Catalyseur de nickel chaque fois qu'il est fabriqué par une méthode selon la revendication 6.